**Europäisches Patentamt**

**European Patent Office**

**Office européen des brevets**

(11) Veröffentlichungsnummer: **0 478 976 A1**

# EUROPÄISCHE PATENTANMELDUNG

(21) Anmeldenummer: **91114978.9**

(22) Anmeldetag: **05.09.91**

(51) Int. Cl.5: **C08K 5/15**, C08L 51/04, C08L 33/08

(30) Priorität: **18.09.90 DE 4029535**

(43) Veröffentlichungstag der Anmeldung: **08.04.92 Patentblatt 92/15**

(84) Benannte Vertragsstaaten:
**BE DE ES FR GB IT NL SE**

(71) Anmelder: **BAYER AG**

**W-5090 Leverkusen 1 Bayerwerk(DE)**

(72) Erfinder: **Piejko, Karl-Erwin, Dr.**
**Unterscheider Weg 7 a**
**W-5060 Bergisch Gladbach 2(DE)**
Erfinder: **Braese, Hans-Eberhard, Dipl.-Ing.**
**Käthe-Kollwitz-Strasse 3**
**W-5000 Köln 71(DE)**
Erfinder: **Billinger, Otto, Dipl.-Ing.**
**Birkenstrasse 13**
**W-5460 Linz a. Rhein(DE)**
Erfinder: **Kubens, Rolf, Dr.**
**Carl-Leverkus-Strasse 1**
**W-5068 Odenthal(DE)**

(54) **Polymerisatmischungen mit verbesserter Thermostabilität.**

(57) Polymerisatmischungen aus Acrylatpfropkautschuken, bestimmten speziellen Acrylatcopolymeren und gegebenenfalls harzartigen Vinylpolymerisaten, die spezielle Oligoepoxidverbindungen enthalten, besitzen eine verbesserte Thermostabilität und eignen sich unter anderem zur Herstellung von Folien.

EP 0 478 976 A1

Die Erfindung betrifft Polymerisatmischungen aus Acrylatpfropfkautschuken, bestimmten speziellen Acrylatcopolymeren und gegebenenfalls harzartigen Vinylpolymerisaten, die spezielle Oligoepoxidverbindungen enthalten.

Polymerisatmischungen aus Acrylatpfropfkautschuken, bestimmten speziellen Acrylatcopolymeren und gegebenenfalls harzartigen Vinylpolymerisaten, die sich zur Herstellung von flexiblen, alterungsbeständigen Folien mit lederartigem Aussehen eignen und durch Kalandrieren und Tiefziehen verarbeitet werden können, sind in den deutschen Offenlegungsschriften 38 11 899 und 37 43 489 beschrieben. Die aus den genannten Polymerisatmischungen hergestellten Folien weisen ein hohes Eigenschaftsniveau auf und besitzen eine gute Alterungsstabilität. Sie werden beispielsweise zur Innenverkleidung in Kraftfahrzeugen eingesetzt. Trotz der im Vergleich zu bisher üblichen, PVC-haltigen Folienformmassen guten Alterungsstabilität auch unter Wärmeeinwirkung, können bei hohen Verarbeitungstemperaturen und/oder langen Verarbeitungszeiten, insbesondere in hellen Farbeinstellungen, Verfärbungen der Folien auftreten, die eine exakte Farbeinstellung bzw. eine Reproduzierung heller Farben erschweren. Es bestand deshalb ein Bedarf nach Polymerisatmischungen, welche eine verbesserte Thermostabilität aufweisen und somit die genannten Nachteile vermeiden.

Es wurde gefunden, daß die für PVC- und/oder ABS-Formmassen üblichen und gebräuchlichen Stabilisierungsmittel wie Alkylzinnmercaptide, phenolische oder aminische Antioxidantien keine Verbesserung der Alterungsstabilität bei den zuvor genannten Polymerisatmischungen bewirken.

Gefunden wurde jedoch, daß überraschenderweise spezielle Oligoepoxidverbindungen die Thermostabilität der obengenannten Polymerisatmischungen soweit verbessern, daß Verfärbungen auch bei höheren Verarbeitungstemperaturen und/oder längeren Verarbeitungszeiten stark vermindert sind.

Gegenstand der vorliegenden Erfindung sind daher Polymerisatmischungen aus Acrylatpfropfkautschuken, bestimmten speziellen Acrylatcopolymeren und gegebenenfalls harzartigen Vinylpolymerisaten, die 0,1 bis 8 Gew.-% bevorzugt 0,5 bis 6 Gew.-%, Oligoglycidylether mehrwertiger Phenole oder Alkohole oder Oligoglycidylester mehrwertiger aromatischer, aliphatischer oder cycloaliphatischer Carbonsäuren oder Mischungen der Oligoglycidylether und Oligoglycidylester enthalten.

Als mehrwertige Phenole für die Oligoglycidylether kommen beispielsweise Bisphenole, wie Bisphenol A, Tetrabrombisphenol A, Tetrachlorbisphenol A, Tetramethylbisphenol A, Bis(4-hydroxyphenyl)sulfon, 1,1-Bis-(4-hydroxyphenyl)cyclohexan und 2,4-Bis-(4-hydroxyphenyl)-2-methylbutan, insbesondere Bisphenol A in Frage; als mehrwertige Alkohole vorzugsweise Diole, wie Butandiol-1,4, Ethandiol, Propandiol-1,3 und Hexandiol-1,6.

Als mehrwertige aromatische Carbonsäuren für die Oligoglycidylester kommen beispielsweise solche mit 8 bis 19 C-Atomen in Frage, als aliphatische Carbonsäuren solche mit 4 bis 18 Kohlenstoffatomen und als cycloaliphatische Carbonsäure solche mit 8 bis 19 Kohlenstoffatomen. Bevorzugt werden Dicarbonsäuren eingesetzt, beispielsweise Phthalsäure, Hexahydrophthalsäure, Tetrahydrophthalsäure oder Adipinsäure.

Besonders bevorzugt werden Diglycidylester von cycloaliphatischen Dicarbonsäuren mit 8 bis 19 Kohlenstoffatomen eingesetzt. Genannt werden Hexahydrophthalsäure und Tetrahydrophthalsäure.

Die für die Polymerisatmischungen eingesetzten Oligoepoxidverbindungen können auch durch Umsetzung mit aliphatischen oder aromatischen Dicarbonsäuren, Dimercaptanen, Schwefelwasserstoff, Ammoniak oder Aminen vorverlängert sein. Die genannten Oligoglycidylether und Oligoglycidylester sind bekannt und beispielsweise im Kunststoffhandbuch, Band XI, Kap. 3 (1971) beschrieben.

Die Polymerisatmischungen aus Acrylatpfropfkautschuken, Acrylatcopolymeren und gegebenenfalls harzartigen Vinylpolymerisaten sind, wie erwähnt, in DE-OS 38 11 899 und DE-OS 37 43 489 beschrieben. Als weitere Bestandteile können den einzusetzenden Polymerisatmischungen die in DE-OS 38 41 669 beschriebenen Polymerisate aus cyclischen aliphatischen Estern und Carbonaten und/oder die in der DE-OS 39 18405 beschriebenen Carbonatgruppen enthaltenden Polyester zugesetzt werden. Polymerisatmischungen, die als dritte Komponente harzartige Vinylpolymerisate enthalten, werden bevorzugt eingesetzt.

Außerdem können die erfindungsgemäßen Polymerisatmischungen die bekannten und üblichen Additive und Verarbeitungshilfsmittel in den üblichen Mengen enthalten.

Die erfindungsgemäßen Polymerisatmischungen können u.a. zur Herstellung von Folien der verschiedensten Art verwendet werden.

Beispiele:

Eine Polymerisatmischung wird nach der DE-OS 38 11 899 aus 45 Gew.-% eines dort beschriebenen Acrylatpfropfktautschuks (Komponente al der Beispiele), 40 Gew.-% eines vernetzten Butylacrylat/Acrylnitrilcopolymeren (Komponten b der Beispiele) und 15 Gew.-% eines Styrol/Acrylnitrilharzes (Komponente c der Beispiele) hergestellt. In diese Mischung werden auf einer Walze jeweils 3 Gew.-% Titandioxidpigment (Bayertitan R-FKD), 0,3 Gew.-% Lichtblau 100 (der Fa. Bayer AG), 0,3 Gew.-% Loxiol G70 (der Fa. Henkel) sowie die in der Tabelle aufgeführten Komponenten zugemischt. Die Thermostabilität wird durch Walzen bei 200°C geprüft und optisch anhand von evtl. auftretenden Farbveränderungen beurteilt.

Tabelle

| Zusätze zu den Polymerisatmischungen (in Gew.-Teilen, bezogen auf 100Gew.-Teile der Ausgangsformmasse) | | | |
|---|---|---|---|
| Beispiel-Nr. | Hexahydrophthalsäurediglycidylester (Komponente A) | Polycaprolacton ($M_w$ = 40.000 g/Mol) | Plastiflo AO1 (der Fa. Atochem) |
| 1 | 1 | - | - |
| 2 | 2 | 5 | - |
| 3 | 1 | 5 | 2,5 |
| 4 | 1 | 10 | 5 |
| 5 | 6 | 10 | 5 |

Vergleichsbeispiele (6-9)

Analog den Beispielen 1 bis 4 werden Vergleichspolymerisatmischungen ohne die Komponente A hergestellt.

Während sich die Vergleichsformmassen 6 bis 9 beim Walzen bei 200°C bereits nach 10 Minuten leicht und nach 20 Minuten bereits stark von hellblau nach grün verfärbt haben, zeigen die erfindungsgemäßen Formmassen 1-5 nach 10 Minuten praktisch keine Verfärbung, nach 20 Minuten ist erst ein schwacher grünlicher Schimmer erkennbar. Bei der Formmasse des Beispiels 5 ist auch nach 20 Minuten noch keine Veränderung sichtbar.

**Patentansprüche**

1. Polymerisatmischungen aus Acrylatpfropfkautschuken, bestimmten speziellen Acrylatcopolymeren und gegebenenfalls hazartigen Vinylpolymerisaten, die 0,1 bis 8 Gew.-% Oligoglycidylether mehrwertiger Phenole oder Alkohole oder Oligoglycidylester mehrwertiger aromatischer, aliphatischer oder cycloaliphatischer Carbonsäuren oder Mischungen der Oligoglycidylether und Oligoglycidylester enthalten.

**Patentansprüche für folgenden Vertragsstaat: ES**

1. Verfahren zur Herstellung von Polymerisaten aus Acrylatpfropfkautschuken, bestimmten speziellen Acrylatcopolymeren und gegebenenfalls harzartigen Vinylpolymerisaten, die 0,1 bis 8 Gew.-% Oligoglycidylether mehrwertiger Phenole oder Alkohole oder Oligoglycidylester mehrwertiger aromatischer, aliphatischer oder cycloaliphatischer Carbonsäuren oder Mischungen der Oligoglycidylether und Oligoglycidylester enthalten, durch Mischen der Komponenten.

2. Verwendung der Polymerisatmischungen nach Anspruch 1 zur Herstellung von Folien der verschiedensten Art.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 292 742 (AMERICAN CYANAMID) 25. Juni 1976<br>* Seite 1, Zeile 35 - Seite 2, Zeile 30;<br>Ansprüche 1,2,5 *<br>--- | 1 | C08K5/15<br>C08L51/04<br>C08L33/08 |
| A | FR-A-2 121 636 (BORG-WARNER) 25. August 1972<br>* Beispiele *<br>* Seite 4, Zeile 24 - Zeile 31; Ansprüche 1-3 *<br>----- | 1 | |
| | | | **RECHERCHIERTE SACHGEBIETE (Int. Cl.5)**<br><br>C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 09 JANUAR 1992 | ENGEL H.S.L. |